# EUROPEAN PATENT APPLICATION

(11) **EP 1 598 823 A1**
(43) Date of publication of application: **23.11.2005**
(21) Application number: 04711334.5
(22) Date of filing: 16.02.2004
(51) Int. Cl.: G11B 20/10

(54) **NETWORK WALKMAN**

(30) Priority: 27.02.2003 CN 03239830
(71) Applicant: Foxda Technology Industrial (Shenzhen) Co. Ltd, Shenzhen Guandgong 518118 (CN)
(72) Inventor: Zheng, Weihong, Shenzhen, Guandgong 518038 (CN); Lu, Zhuoxiong, Shenzhen, Guandgong 518038 (CN)
(74) Representative: Johnson, Terence Leslie
(86) International application number: PCT/CN2004/000123
(87) International publication number: WO 2004/077431

(57) **Abstract**

The present invention relates to a walkman, particularly to a network walkman which can perform collinear transmission of USB connecting line and audio earphone line. It is mainly **characterized in that** a switch integrated circuit is added to the conventional circuit to perform the automatic switch-over between the USB interface and the audio output interface, so as to realize the function of collinear transmission of the USB connecting line and the audio earphone line. On the basis of the conventional technique, said two interfaces are simplified as a single interface, which can both obtain more preferable appearance and reduce the cost. Therefore, this invention is convenient for the users and has good applicable function.

## Description

### Technical field

The present invention relates to a network communication tool, particularly to a network walkman which can perform collinear transmission of USB connecting line and audio earphone line.

### Background art

In view of the fact that the USB interface and audio output interface in the network walkmans such as MP3 player in current market are mostly designed as two independent interfaces, these network walkmans have the following disadvantages (taking example for MP3 player):
- Inconvenience for connecting with a computer. Two types of design are generally employed in the USB interface of MP3 player. One type of design is to directly provide the USB interface on the body of the player, wherein the USB interface must be shielded by a matched lid to obstacle the entrance of dirt in the time except when it is connected with a computer for downloading music. Thus, it is certain to influence the appearance of the MP3 player on its visual beauty. Further, since it has definite volume itself, it is certain that the player would be twisted or mix-placed with a plurality of other lines such as power supply line, mouse line, sound box line and the like when it is connected directly with the USB interface of a computer. Therefore, it is greatly inconvenient for the user. The other type of design is to provide a minimized USB interface which is similar to a jack of earphone on the body of the player. However, it is necessary for such USB interface to be connected to the USB interface of the computer via an interface switch line, which is also troublesome.
- Inevitable waste because of using two kinds of interfaces. The conventional MP3 player must be provided with a USB connecting interface and an audio output interface, which obviously causes a waste of sources and increases the production cost. Further, the competition force of the product is surely decreased in the market mainly characterized in price competition.
- Inconvenience for carrying. The user of the MP3 player must carry the USB connecting line and the audio output line at any time when he or she uses such product, which causes certain inconvenience.

### Contents of the invention

An object of the present invention is to overcome the above disadvantages, and provide a network walkman which can perform collinear transmission of the USB connecting line and the audio earphone line so as to facilitate the use of the network walkman and lower the cost.

The technical solution of this invention is to provide a network walkman, which comprises a central processing unit, a universal serial bus (i.e., USB), a read-only memory (ROM), a flash memory, a liquid crystal display (LCD) driver circuit, and an audio signal amplifier circuit, etc., wherein an audio output line is leaded out from the audio signal amplifier circuit. The structure feature of this invention is to further comprise a switch integrated circuit, which is connected to the USB and the audio output line respectively and is provided a USB/audio output interface at its output terminal.

Said interface is a USB interface when it is connected to a USB interface of the computer, and said interface is an audio output interface when it is connected to an audio earphone line.

Said switch integrated circuit uses a relay integrated circuit of G6k-2G-Y type.

One line of said USB directly acts as an output interface line and is connected to the pin 1 of G6k-2G-Y via a resistance; another line thereof is connected to the pin 1 of G6k-2G-Y via a diode, wherein a positive terminal of the diode is connected to the line, a negative terminal of the diode is connected to the pin 1 of G6k-2G-Y, and the positive terminal of the diode is also connected to pin 8 of G6k-2G-Y; the other two lines are connected to pin 4 and pin 5 of G6k-2G-Y, respectively.

One line of said audio output line directly acts as an output interface line, and is connected to a node connecting the positive terminal of said diode; the other two lines thereof are connected to pin 2 and pin 7 of G6k-2G-Y, respectively. The leading-out wires of pin 3 and pin 6 of G6k-2G-Y are the other two output interface lines.

In this invention, a switch integrated circuit is added to the conventional circuit to perform the automatic switch-over between the USB interface and the audio output interface, so as to realize the function of collinear transmission of the USB connecting line and the audio earphone line. On the basis of the conventional technique, said two interfaces are simplified as a single interface, which can both obtain more preferable appearance and reduce the cost. Therefore, this invention is convenient for the users and has good applicable function.

### Description of Drawings

Hereafter, this invention will be further described in conjunction with the accompanying drawings.

Fig. 1 is a block diagram of this invention; and

Fig. 2 is a circuit connecting diagram of this invention.

In the above drawings, USB refers to universal serial bus, Audio Out refers to the audio output line, MIC refers to microphone, LINE refers to audio line, KEYBOARD refers to keyboard, and LCD refers to liquid crystal display.

### Preferable mode of carrying out the invention

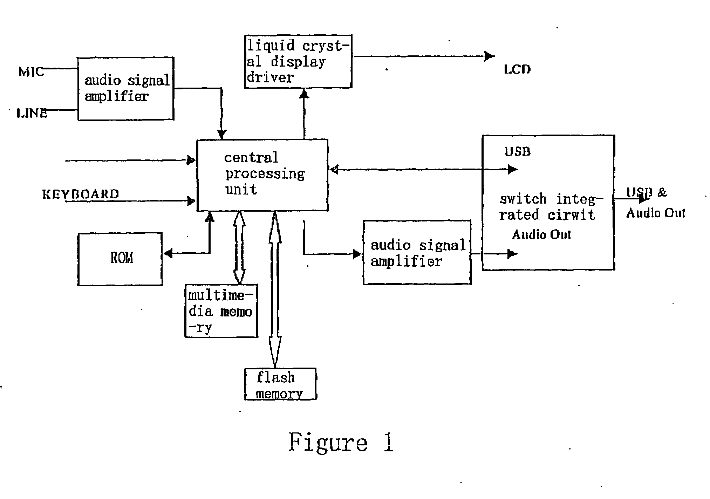

Referring to Fig. 1, this invention comprises central processing unit (CPU), universal serial bus (i.e., USB), read-only memory (ROM), flash memory, multimedia memory (MMC), liquid crystal display driver circuit (LCD Driver) and audio signal amplifier circuit (AMP), wherein an audio output line is leaded out from the audio signal amplifier circuit. It further comprises a switch integrated circuit which uses the USB and the audio output line as input lines and is provided a USB/audio output interface at its output terminal. Said interface is a USB interface when it is connected to the USB interface of the computer, and said interface can be automatically switched to be an audio output interface when it is connected to the audio earphone line. That is, it can realize automatic switch-over between the two kinds of interfaces without requiring the user to manually switch the interfaces.

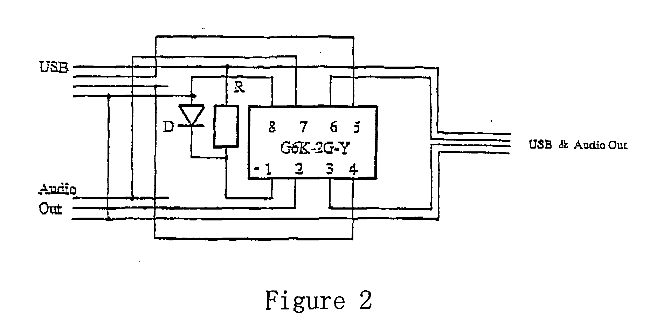

Referring to Fig. 2, it shows the circuit connecting diagram of a switch integrated circuit. Said switch integrated circuit uses a relay integrated circuit of G6k-2G-Y type, wherein pin 1 of G6k-2G-Y is positive terminal of power supply, pin 2 is normal closed contact terminal, pin 3 is signal output terminal, pin 4 is normal opened contact terminal, pin 5 is normal opened contact terminal, pin 6 is signal output terminal, pin 7 is normal closed contact terminal, and pin 8 is negative terminal of power supply. The connections with the USB and the audio output line are as follows: as for the USB, one line of said USB directly acts as an output interface line and is connected to the pin 1 of G6k-2G-Y via a resistance; another line thereof is connected to the pin 1 of G6k-2G-Y via a diode, wherein a positive terminal of the diode is connected to the line, a negative terminal of the diode is connected to the pin 1 of G6k-2G-Y, and the positive terminal of the diode is also connected to pin 8 of G6k-2G-Y; the other two lines of said USB are connected to pin 4 and pin 5 of G6k-2G-Y. respectively; as for the audio output line, one line of said audio output line directly acts as an output interface line, and is connected to a node connecting the positive terminal of said diode; the other two lines of the audio output line are connected to pin 2 and pin 7 of G6k-2G-Y, respectively; the leading-out wires of pin 3 and pin 6 of G6k-2G-Y are the other two output interface lines.

When this invention is connected to the USB interface of the computer, power is supplied to the pin 1 of G6k-2G-Y by the USB interface of the computer, which causes the current flow inside, and wherein it disconnects when the normal closed contact of the relay acts and it closes when the normal opened contact acts. As a result, the pin 4 and the pin 3 of G6k-2G-Y connect and communicate with each other; the pin 5 and the pin 6 connect and communicate with each other. It can be seen that the output interface line at output terminal is actually in accordance with the USB of this invention. In this case, said interface is a USB interface and the data transmission between the USB interface and the computer can be realized.

When this invention is connected to the audio earphone line, no power is supplied to the pin 1 of G6k-2G-Y Thus, there is no current in the circuit and the relay remains normal state, then the pin 2 and the pin 3 of G6k-2G-Y connect and communicate with each other, and the pin 7 and pin 6 connect and communicate with each other. The output interface line at the output terminal is actually in accordance with the audio output line of this invention. In this case, said interface is an audio output interface which can realize the output of the audio signals and make the user listen to the music via audio earphone.

This invention uses only a single relay integrated circuit, which acts as a switch device, to accomplish the synthesis and separation of the USB signal and the audio signal. Two functions of signal input and output (i.e., receiving and reproducing) can be realized by means of a single interface provided on the body of the player itself. Therefore, the player has distinctive applicable function.

Although the features of this application are only explained by one embodiment in this invention, however, this invention is not limited to this embodiment in terms of circuit And, the modifications which belong to the same invention concept with this invention and the like are all covered in the protection scope of this invention.

### Industrial applicability

This invention is used as a portable network communication tool, which can both perform data transmission via connection with the USB interface of the computer, and perform automatic switch-over to listen to the music via audio earphone. In this network walkman, a switch integrated circuit is added to the conventional circuit to perform the automatic switch-over between the L7SB interface and the audio output interface, so as to realize the function of collinear transmission of USB connecting line and audio earphone line. Said two interfaces in conventional body are simplified as a single interface, which can both obtain more preferable appearance and reduce the cost. Therefore, this invention is convenient for the users and has good applicability.

## Claims

1. A network walkman, which comprises a central processing unit, a universal serial bus (i.e., USB), a read-only memory, a flash memory, a liquid crystal display driver circuit, an audio signal amplifier circuit, etc., wherein an audio output line is leaded out from the audio signal amplifier circuit, **characterized in that**: the network walkman further comprises a switch integrated circuit which is connected to the USB and the audio output line respectively, and is provided a USB/audio output interface at its output terminal;
said interface is a USB interface when it is connected to a USB interface of a computer, and said interface is an audio output interface when it is connected to an audio earphone line.

2. A network walkman according to Claim 1, **characterized in that**: said switch integrated circuit uses a relay integrated circuit of G6k-2G-Y type.

3. A network walkman according to Claim 1 or 2, **characterized in that**: one line of said USB directly acts as an output interface line and is connected to pin 1 of G6k-2G-Y via a resistance; another line thereof is connected to the pin 1 of G6k-2G-Y via a diode, wherein a positive terminal of the diode is connected to the line, a negative terminal of the diode is connected to the pin 1 of C6k-2G-Y, and the positive terminal of the diode is also connected to pin 8 of G6k-2G-Y; the other two lines of said USB are connected to pin 4 and pin 5 of G6k-2G-Y, respectively; one line of said audio output line directly acts as an output interface line, and is connected to a node connecting the positive terminal of said diode; the other two lines thereof are connected to pin 2 and pin 7 of G6k-2G-Y, respectively; the leading-out wires of pin 3 and pin 6 of G6k-2G-Y are the other two output interface lines.
